# EUROPEAN PATENT SPECIFICATION

(11) **EP 3 823 171 B1**
(45) Date of publication and mention of the grant of the patent: **28.12.2022**
(21) Application number: 19209503.2
(22) Date of filing: 15.11.2019
(51) Int. Cl.: H04B 1/00

(54) **APPARATUS AND METHOD FOR DATA TRANSMISSIONS THROUGH ROTABLE JOINTS**
VORRICHTUNG UND VERFAHREN ZUR DATENÜBERTRAGUNG DURCH DREHGELENKE
APPAREIL ET PROCÉDÉ POUR TRANSMISSIONS DE DONNÉES PAR L'INTERMÉDIAIRE DE JOINS ROTATIFS

(43) Date of publication of application: 19.05.2021
(73) Proprietor: HENSOLDT Sensors GmbH, 82024 Taufkirchen (DE)
(72) Inventor: Baras, Torben, 89081 Ulm (DE); Knopf, Sebastian, 89081 Ulm (DE); Priewe, Klaus-Dieter, 89143 Blaubeuren (DE)
(74) Representative: LifeTech IP Spies & Behrndt Patentanwälte PartG mbB

(56) References cited:
- WO-A1-2014/091229
- GB-A- 2 545 041
- US-A1- 2014 308 899
- US-A1- 2015 229 460
- US-A1- 2019 044 548

## Description

The present invention relates to an apparatus for transmitting signals from a rotatable radar component to a rotary joint and, in particular, to frequency multiplexing for an extension of all RF channels in a rotary joint.

### BACKGROUND

Rotating radar systems, as they are installed, for example, on ships or on land, include a stationary component and a rotatable component, which are connected by a rotary joint that enables a relative rotation between them. In these systems there is a need to transmit a significant amount of data between, for example, the radar frontend (e.g. above deck of a ship) and cabinets (e.g. below deck). However, the data transmission is often problematic in these systems, because only a limited number of physical RF-channels are present in the rotary joint. Each physical channel may carry one information channel at a specific frequency or a specific frequency band. Unfortunately, due to the construction of the rotary joint, the number of physical channels is determined by the design and cannot be increased without modification of the latter.

US 2015/0229460 A1 discloses a conventional W-band combiner-splitter, which is fabricated using 3D printers.

Therefore, there is a demand by systems to allow for more RF channels usable for data transmissions over given rotary joints.

### SUMMARY OF THE INVENTION

At least some of the above-mentioned problems are solved by a system for transmitting signals according to claim 1 or claim 8 and corresponding methods according to claim 13 and claim 14. The dependent claims refer to further advantageous realizations for the subject matters of the independent claims.

The present invention relates to an apparatus for transmitting a first signal and a second signal from a radar component through a rotary joint. The (transmission) apparatus comprises: a first input or output for the first signal, a second input for the second signal, an upstream converter, and a diplexer with a first input for the first signal and a second input for a converted second signal. The upstream converter is configured to convert the second signal into the converted second signal so that the converted second signal and the first signal lie in different frequency bands. The diplexer is configured to combine the converted second signal with an unchanged first signal into a data stream and to output the data stream into a data channel for transmission through the rotary joint.

The radar component may be the rotatable or the stationary radar component. The channel at the output may be a single physical channel available in the rotary joint (or one of the available physical channels). Since after conversion the signals are in different frequency bands, they can be transmitted in parallel (e.g. simultaneously at the same time) - at least as long as the frequency bands are separated sufficiently from each other. The upstream converter may increase or decrease the frequency of the second signal. For example, when the first and second signal are in the same frequency band, the upstream converter shifts the frequency of the second signal.

It is further understood that the first signal may also propagate in the opposite direction, i.e. the corresponding channel can be a reverse channel. The data communication over this channel may not be modified by the conversion scheme. The first input or output may also be an I/O port.

On the other hand, it may also be possible to implement another converter between the first input and the diplexer or that two converters can be formed along the transmission lines of the first signal and for the second signal. If only one upstream converter is present, the other line (e.g. between the first input and the diplexer) may be a feed-through wiring. It is further understood, that more than one input signals may be present, in which case the converter may shift each input signal into a different frequency band and the diplexer may be part of a multiplexer to transmit all signals in parallel.

Optionally, the upstream converter comprises: a generator configured to generate a reference signal, and a frequency mixer configured to generate the converted second signal by mixing the second signal with the reference signal. The generator may include a local oscillator and the reference signal can be a clock signal having a predefined frequency that is used in the frequency mixing, e.g. to up-convert the second signal.

Optionally, the generator comprises a local oscillator and one or more frequency multiplier to generate the reference signal with a predefined reference frequency (e.g. 2400 MHz or any other). The multiplier may provide a frequency multiplication by an integer number. Moreover, multiple multipliers can be arranged to provide subsequent multiplications of the frequency. Thus, the frequency of the reference signal can be adjusted in accordance to the transmission band(s) through the rotary joint.

Optionally, the apparatus further comprises an adder that is configured to add the converted second signal and a coherence maintenance signal, which is derived from an output of the local oscillator. The coherence maintenance signal may be the reference signal itself. In addition, the adder may provide a result as input at the second input of the diplexer.

Optionally, the rotary joint is coupled to a receiver adapted to receive the data stream from the apparatus. The generator may also be configured to generate and to provide a synchronization signal to enable a synchronization with the reference signal at the receiver. The synchronization signal may also be transmitted through another channel or added to the data stream and thus can be used as coherence maintenance signal at a subsequent downstream converter. Actually, the synchronization signal can be any signal which is suitable to provide a synchronization in a corresponding mixer at is the receiver. In particular, the reference signal may be a clock signal itself or any multiplication of the clock signal. Moreover, the reference signal can be used as coherence maintenance signal to maintain a coherence along the signal path the first and second signal.

Optionally, the apparatus further comprising at least one of the following components:
- a first filter arranged between the second input and the upstream converter for a frequency filtering of the second signal;
- a second filter arranged between the generator and the frequency mixer for a frequency filtering of the reference signal;
- a third filter arranged between the frequency mixer and the second input of the diplexer for a frequency filtering the converted second signal;
- a first amplifier arranged between the frequency mixer and the first filter;
- a second amplifier arranged between the frequency mixer and the second input of the diplexer for amplifying the converted second signal.

It is understood that the frequency mixer may generate frequencies of any linear combination of the frequencies of the second signal and the reference signal. The subsequent third filter can be configured to select (filter) the frequency of interest. This will ensure that the frequency bands of the first and converted second signal will not interfere (or only negligible), while allowing a parallel transmission over one single physical channel.

For example, the first signal may be in a first frequency band between 1030 MHz and 1090 MHz and the upstream converter may be configured to generate the converted second signal in a second frequency band between 1200 MHz and 1310 MHz. Of course, embodiments shall not be limited on these particular examples. Any frequency bands are possible and implementable (by selecting appropriate frequency multiplier), as long as theses band can be transmitted simultaneously through the rotary joint.

Optionally, the upstream converter and/or the diplexer are high-power component(s) operable at powers of up 2 kW or more power. Same applies to the optional filters along the signal paths of the first signal and/or the second signal.

Embodiments relate also to an apparatus for extracting a first signal and a second signal from a data stream received from a radar component through a rotary joint. The (extraction) apparatus comprises an input for receiving the data stream from the rotary joint, wherein the data stream includes the first signal and a converted second signal. The apparatus further comprises a diplexer configured to separate the first signal and a converted second signal in the data stream, and a downstream converter configured to extract the second signal from the converted second signal. Finally, the apparatus includes a first output for providing an unchanged first signal and a second output for providing the second signal.

The first output and the second output may be configured to couple to different physical channels.

The radar component may be the rotatable or the stationary radar component. Hence, this (extraction) apparatus is complementary to the previously defined (transmission) apparatus in that it will extract from data stream the first and second signal that have been combined by the previous apparatus for transmitting.

Optionally, the data stream further includes a coherence maintenance signal suitable for maintaining a coherence between conversions at the downstream converter and an associated upstream converter. In particular, the reference signals used for up-conversion and down-conversion should be coherent to each other. The diplexer is further configured to provide the converted second signal together with the coherence maintenance signal to the downstream converter. The downstream converter may further comprise: a further diplexer configured to separate the provided converted second signal and the coherence maintenance signal, and a frequency mixer, which may be configured to enable an extraction of the second signal based on the converted second signal and the coherence maintenance signal.

Optionally, when the data stream includes a coherence maintenance signal suitable for maintaining a coherence between conversions at the downstream converter and an associated upstream converter, the diplexer may also be a part of a triplexer configured to separate the first signal, the upconverted second signal and the coherence maintenance signal. The downstream converter may again comprise a frequency mixer configured to convert the converted second signal to the second signal using the coherence maintenance signal.

The extraction of the second signal may include a filtering of a mixed signal of the frequency mixer. For example, the mixing may use the same reference signal (or a signal derived therefrom) as in the upstream converter and which may be transmitted with the data stream. This will ensure coherence (the second signal can be extracted from the data stream, ideally, without loss of information).

Optionally, the apparatus for extracting further comprises at least one of the following components:
- a first filter arranged between the frequency mixer and the second output for a frequency filtering of the second signal;
- a first amplifier arranged between the first filter and the second output the amplify the second signal;
- a frequency multiplier arranged between the frequency mixer and the further diplexer or the triplexer to generate a reference signal from the coherence maintenance signal, the reference signal having a frequency in accordance to a frequency used in a conversion of the converted second signal;
- a second filter arranged between the frequency mixer and the frequency multiplier for a frequency filtering of the reference signal;
- a second amplifier arranged between the frequency multiplier and the further diplexer or the triplexer for amplifying the coherence maintenance signal.

Embodiments relate also to a data transmission system for signals through a rotary joint between a rotatable radar component and a stationary radar component, the system comprising:
- a first apparatus for transmitting as previously defined; and
- a second apparatus for extracting as previously defined.

The first apparatus may couple to the stationary radar component or to the rotatable radar component. Accordingly, the second apparatus may couple to the rotatable radar component or to the stationary radar component.

Optionally, the apparatus is further configured to compensate a shift in the phase and/or amplitude caused by a changed temperature. This compensation may use calibration data. For example, the calibration can be carried out before operation or during operation (e.g. when no data is transmitted) to determine a temperature dependence of the phase and/or amplitude of the processed signals. As result of this calibration corresponding compensation factors/data can be considered to eliminate the temperature drift. Effectively, this will ensure that the system behaves temperature independent.

Embodiments relate also to a method for transmitting a first signal and a second signal from a radar component to a rotary joint, the method comprising:
- transmitting (receiving or sending), at a first input, the first signal;
- receiving, at a second input, the second signal;
- converting the second signal into a converted second signal so that the converted second signal and the first signal lie in different frequency bands; and
- combining, by a diplexer, the first signal and the converted second signal into a data stream and outputting the data stream into a data channel passing through the rotary joint.

Embodiments relate also to a method for extracting a first signal and a second signal from a data stream received from a radar component through a rotary joint, the method comprising:
- receiving the data stream from the rotary joint, the data stream including the first signal and a converted second signal;
- separating, by a diplexer, the first signal and a converted second signal from the data stream;
- extracting the second signal from the converted second signal;
- providing, at a first output, the first signal; and
- providing, at a second output, the second signal,
wherein the first output and the second output couple to different channels.

According to further embodiments, the number of frequency bands and thus the number of signals that shall be transmitted simultaneously can be more than two. For this, the diplexer of the (transmission) apparatus and accordingly in the (extraction) apparatus can be replaced my triplexer or general frequency multiplexer to cover the available physical channel by multiple information channels. Accordingly, the upstream and downstream converter will convert the multiple signals into the various frequency bands. The number can be arbitrary, but due to the limited width of the physical channel, the bandwidth of the multiple frequency bands will be smaller.

In any case, embodiments rely on a frequency multiplexing scheme to enable more than one information channel on the same physical RF channel. This provides, in particular, one or more of the following advantages:
- It is possible to use one physical channel for two or more signals preserving the signal coherence. Thus, the functionality of the system behind can be extended without needing to replace the rotary joint on the exemplary vessel.
- Each physical RF-channel present in a given rotary joint allows parallel transmissions of data between the exemplary radar frontend above deck and cabinets below deck on a ship.
- The construction of the rotary joint with a given number of physical channels does not need to be changed.
- New system functions, e.g. IFF (identification friend or foe) Mode 5 Level 2, can use more RF channels for data than physically available.
- Since no new design is needed, the apparatus saves costs for logistic reasons.

### BRIEF DESCRIPTION OF THE DRAWINGS

Various embodiments of the present invention will be described in the following by way of examples only, and with respect to the accompanying drawings, in which:
- Fig. 1: depicts a transmission apparatus for a first signal and a second signal from a (rotatable) radar component to a rotary joint according to an embodiment.
- Fig. 2: depicts further details of the transmission apparatus according to further embodiments.
- Fig. 3: depicts an extraction apparatus according to an embodiment.
- Fig. 4: illustrates the rotary joint transmission.
- Fig. 5A: shows a frequency mixing chart for an exemplary up-conversion.
- Fig. 5B: depicts a measurement of mixing products for the up-conversion.
- Fig. 6A: shows a frequency mixing chart for an exemplary downconversion.
- Fig. 6B: depicts a measurement of mixing products for the downconversion.
- Fig. 7: depicts a flow chart for a method for transmitting data through a rotary joint of a radar system according to an embodiment.

### DETAILED DESCRIPTION

Various examples will now be described more fully with reference to the accompanying drawings in which some examples are illustrated.

Accordingly, while examples are capable of various modifications and alternative forms, the illustrative examples in the figures and will herein be described in detail. It should be understood, however, that there is no intent to limit examples to the particular forms disclosed, but on the contrary, examples are to cover all modifications, equivalents, and alternatives falling within the scope of the disclosure. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.). The term "between" should be understood as "between along the transmission path of signals" and not necessarily in a spatial sense.

The terminology used herein is for the purpose of describing illustrative examples only and is not intended to be limiting. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, steps, operations, elements and/or components, but do not preclude the presence or addition of one or more other features, steps, operations, elements, components and/or groups thereof.

Unless otherwise defined, all terms (including technical and scientific terms) used herein have the same meaning as commonly understood by one of ordinary skill in the art to which examples belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

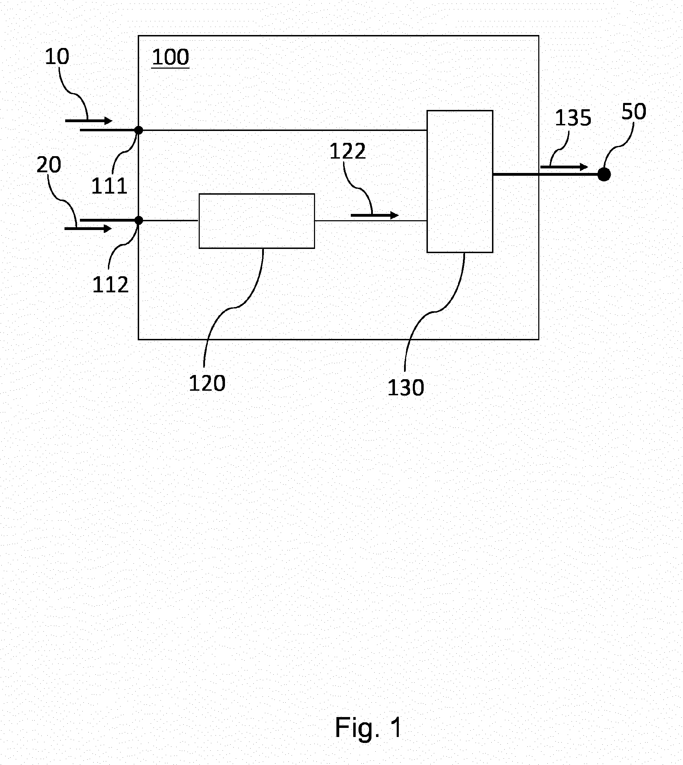

Fig. 1 depicts an apparatus 100 for transmitting a first signal 10 and a second signal 20 from a (e.g. rotatable) radar component to a rotary joint 50. The apparatus comprises a first input 111 for the first signal 10, a second input 112 for the second signal 20, an upstream converter 120 (up-converter), and a diplexer 130 with a first input for the first signal 10 and a second input for the converted second signal 122. The upstream converter 120 is configured to convert the second signal 20 into a converted second signal 122 so that the converted second signal 122 and the first signal 10 lie in different bands. The diplexer 130 is configured to combine the second converted signal 122 with the first signal 10 into a data stream 135 and to output the data stream 135 into a (single) data channel passing through the rotary joint 50.

The upstream converter may, in particular, increase the frequency. Thus, the upstream converter 120 may up-convert the frequency towards a high frequency band and is sometimes denoted as up-converter.

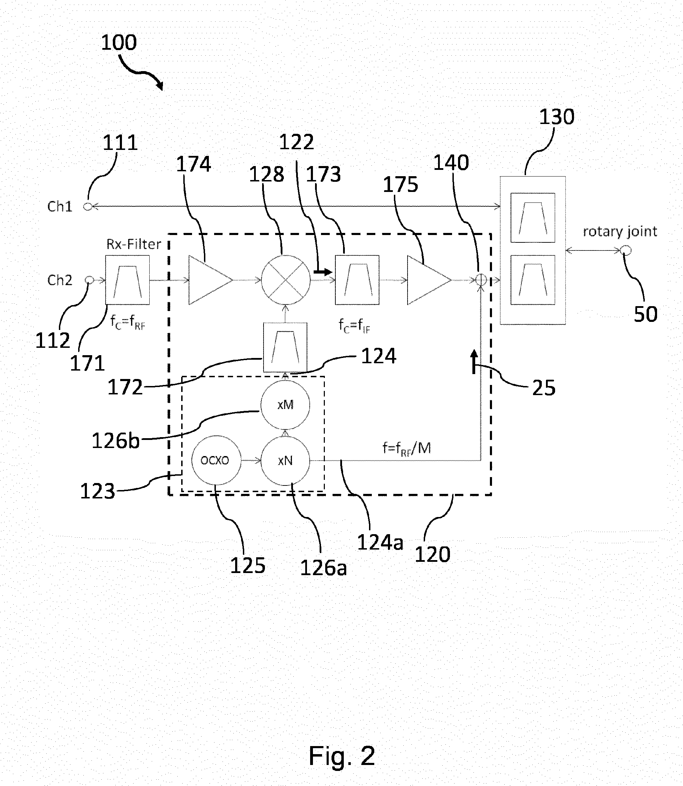

Fig. 2 depicts further details of the transmission apparatus 100 of Fig. 1. The upstream converter 120 includes in this embodiment the following components: a generator 123, a frequency mixer 128, an adder 140, a first amplifier 174, a second amplifier 175, a first filter 171, a second filter 172 and a third filter 173. The adder 140 is formed between the frequency mixer 128 and the second input of the diplexer 130. The first filter 171 is arranged between the second input 112 and the upstream converter 120. The first amplifier 174 is arranged between the first filter 171 and the frequency mixer 128. The third filter 173 and the second amplifier 175 are arranged in this order between the frequency mixer 128 and the adder 140. The generator 123 is configured to generate a reference signal 124 and includes for example a local oscillator 125 and a first frequency multiplier 126a and a second frequency multiplier 126b. The second filter 172 is arranged between the generator 123 and the frequency mixer 128. The first frequency multiplier 126a is arranged between the local oscillator 125 und the second frequency multiplier 126b. In addition, a signal generated by first frequency multiplies 126a is fed to the adder 140.

The local oscillator 125 generates a signal with a predetermined frequency, which is input in the first frequency multiplier 126a, where the frequency is multiplied by an integer N. The resulting signal is used as a coherence maintenance signal 25, which is fed to the adder 140 and to the second frequency multiplier 126b, where the frequency of coherence maintenance signal 25 is once again multiplied by an integer M. The result is the reference signal 124, which after passing a second filter 172 (to have desired frequency) is fed to the frequency mixer 128 for frequency conversion. The second filter 172 may be a bandpass filter with an exemplary center frequency fc = 2400 MHz. The frequencies mentioned here and in the following are only examples, which can be adjusted to concrete situations.

The second signal 20 is received from the second input 112 and is fed into the first filter 171, which may be a bandpass filter with an exemplary center frequency fc = 1090 MHz. The result of this filtering is input into the first amplifier 174, which provides the amplified second signal for the mixer 128. The frequency mixer 128 mixes the reference signal 124 with the filtered second signal to generate, apart from many other frequency components, the converted second signal 122. In this example, the converted second signal 122 is the difference between the center frequencies of the second filter 172 and first filter 171 and has a frequency around 1310 MHz. Therefore, the third filter 173 is again an exemplary band pass filter with an exemplary center frequency of 1310 MHz to select the desired frequency component.

Finally, the second amplifier 175 amplifies the resulting converted second signal 122 and feeds the result to the adder 140. The adder 140 combines the converted second signal 122 with the coherence maintenance signal 25 and provides the result as input for the second input of the diplexer 130. The diplexer 130 combines the converted second signal 122 and the first signal 10, which is unchanged by the apparatus 100 and is received by the first input of the diplexer 130. The result can be transmitted on a single physical channel as a data stream 135 through the rotary joint 50.

It is understood that by selecting the local oscillator 125 and the multiplications of the first and second multipliers 126a, 126b, the center frequency of the third filter 173, the resulting frequency band of the converted second signal 122 can be adjusted almost freely. In other words, the frequencies can be adjusted in accordance to a particular rotary joint.

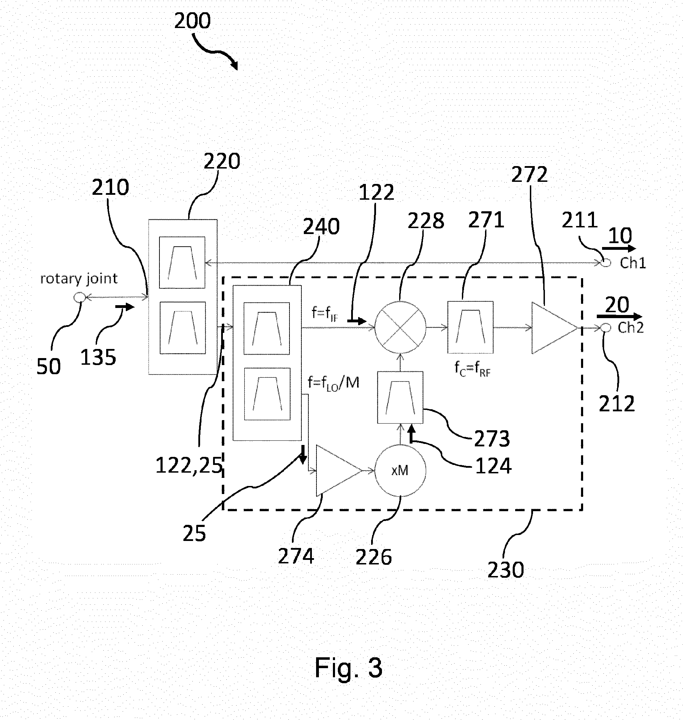

**Fig.** 3 depicts further details of an (extraction/separation) apparatus 200 according to an embodiment, which is formed in a complimentary way to the (transmission) apparatus of Fig. 2. The depicted apparatus 200 receives from the rotary joint 50, the data stream 135 that could have been generated by the transmission apparatus 100. The apparatus 200 is configured to extract a first signal 10 and a second signal 20 from the data stream 135. The apparatus comprises: an input 210 for receiving the data stream 135 from the rotary joint 50, a diplexer 220, a downstream converter 230, and a first output 211 for providing the first signal 10 and a second output 212 for providing the second signal 20. The first output 211 and the second output 212 are configured to couple to different channels.

The data stream 135 includes the first signal 10, the converted second signal 122, and a coherence maintenance signal 25, which is designed to allow maintaining coherence between the downstream conversion and an associated upstream conversion. The diplexer 220 is configured to separate the first signal 10 and a signal combination with the converted second signal 122 and the coherence maintenance signal 25 from the data stream 135. The downstream converter 230 is configured to convert the converted second signal 122 and to extract the second signal 20 therefrom. For this, the downstream converter 230 comprises a further diplexer 240 configured to separate the provided converted second signal 122 from the coherence maintenance signal 25. The downstream converter 230 further includes a frequency mixer 228 configured to convert (by mixing) the converted second signal 122 to the second signal 20 using the coherence maintenance signal 25.

This conversion can be carried out in the opposite way as in the upstream converter 120 in Fig. 2. The second output of the diplexer 220 provides the upconverted second signal 122 in combination with the coherence maintenance 25. This signal is input into the further diplexer 240 which separates the converted second signal 122 and the coherence maintenance signal 25. The coherence maintenance signal 25 is amplified by the second amplifier 274 whose frequency is multiplied by a factor of M by the frequency multiplier 226. The resulting reference signal 124 is filtered by a second (bandpass) filter 273 arranged between the frequency mixer 228 and the frequency multiplier 226. This bandpass filter 273 may have a center frequency of 1200 MHz.

In the simplest case the coherence maintenance signal 25 is transmitted from the upstream conversion which will automatically maintain coherence at the downstream conversion.

Furthermore, a first filter 271 is arranged between the frequency mixer 228 and the second output 212 for a frequency filtering of the second signal 20. This first filter 271 may be bandpass filter with a center frequency of 1090 MHz. A first amplifier 272 is arranged between the first filter 271 and the second output 212 to amplify the second signal 20 before outputting it at the second output 212.

Therefore, the system combining the apparatus 100 for transmitting and the apparatus 200 for extracting solve the earlier mentioned problems by the following procedure:
One RF channel (e.g. at 1090 MHz) is shifted in frequency (e.g. to 1310 MHz) by means of a sinusoidal signal from the generator 123 (e.g. at 2400 MHz) derived from the local oscillator 125. The shifting is carried out in a first frequency converter unit 120. The shifted channel (the converted second signal 122, e.g. at 1310 MHz), an integer fraction of the local oscillator 125 (e.g. 1200MHz) and another RF channel (e.g. at 1090 MHz) for the first signal 10 are combined by means of a diplexer filter 130.

Thus, the sum of a first RF channel (first signal 10), a shifted second RF channel (converted second signal 122) and a local oscillator tone 25 are transferred via one physical channel of the rotary joint 50. Below the exemplary deck, the first RF channel 10 is separated from the second, shifted RF channel 122 and the local oscillator tone 25 by means of second diplexer filters 220, 240. The second shifted RF channel 122 is re-shifted to its original frequency by using the transferred local oscillator tone 25 also transferred via the rotary joint 50. The reshifting and recovery of the local oscillator is carried out in a second frequency converter unit (downstream converter 230). Due to the transfer of the local oscillator via the rotary joint 50, the frequency up- and down conversion is entirely coherent, which is important for many applications.

For an optimized operation, the frequencies and frequency multiplication are to be selected depending on the given rotary joint, which will is detailed in the following.

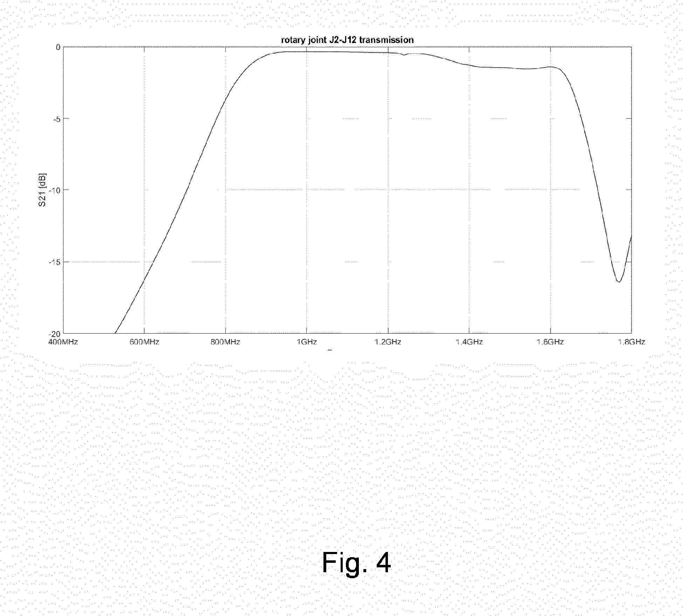

**Fig. 4** illustrates the rotary joint magnitude transmission by depicting the forward transmission coefficient |S₂₁| as function of the frequency. Due to the frequency response of the RF channels of the rotary joint 50, the usable frequency range is limited. For the depicted case, transmissions are possible in the frequency band between 800 MHz and 1.6 GHz. For a proper functionality, the 2-channel rotary joint 50 should, however, transmit three different channels. This is made possible by a form of diplexing implemented by the embodiments as described before.

In the case of frequency diplexing one channel can up-converted (e.g. in the rotating antenna), followed by a down-conversion (e.g. in the stationary cabinet). It can also be the other way around or both cannels can be converted to be separate from one another. Therefore, the system is separated in two parts (apparatus 100 and apparatus 200) connected by the rotary joint 50.

The following analysis results in a frequency concept to prevent any spectral inband components and ensure spectral purity.

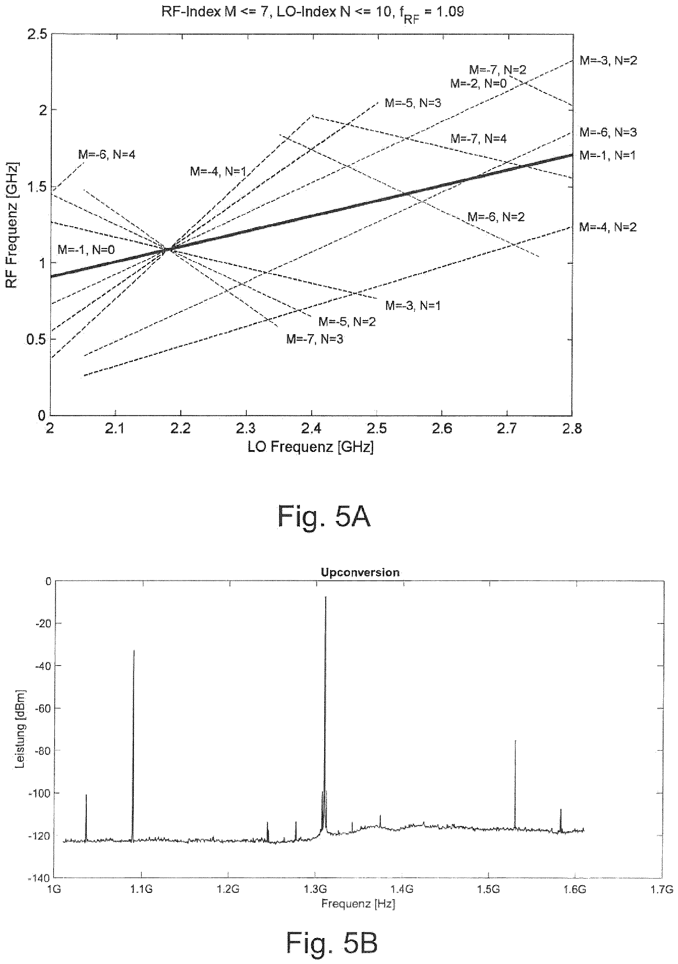

**Fig. 5A** shows a frequency mixing chart for an exemplary up-conversion (in the upstream converter 120). In detail, the excited RF frequencies are shown as functions of the frequency of the local oscillator (LO), where M and N denote the harmonic excitations with M being at most 7 and N being at most 10.

As can be derived from Fig. 5A, it is possible to determine preferable local oscillator frequencies for the conversion by plotting higher order mixing products into one diagram (see the different lines relating to different orders M, N of the corresponding convolution product). These components are generated by the frequency conversion in a mixer 120 and depend on the chosen local oscillator (LO) frequency of the converter displayed on the x axis.

For example, the thick line corresponds to leading order M=-i, N=i, for which the desired signal is expected. Now, a good frequency candidate for the LO frequency can be selected by ensuring that all other frequency lines are further away (a large gap is optimal). This is, for example, the case for the LO frequency of about 2.4 GHz.

**Fig. 5B** depicts a measurement of spectral power of mixing products (as lines) for up-conversion using the preferred the 2.4 GHz LO frequency. It is apparent that the RF frequency of about 1.3 GHz related to the mixing product (M,N) = (-1, 1) in Fig. 5A allows the transmission of high power. More importantly, there are no other lines around this frequency of 1.3 GHz. Thus, the corresponding frequency band will allow an efficient data transmission.

Therefore, a suitable LO frequency of 2.4 GHz is found.

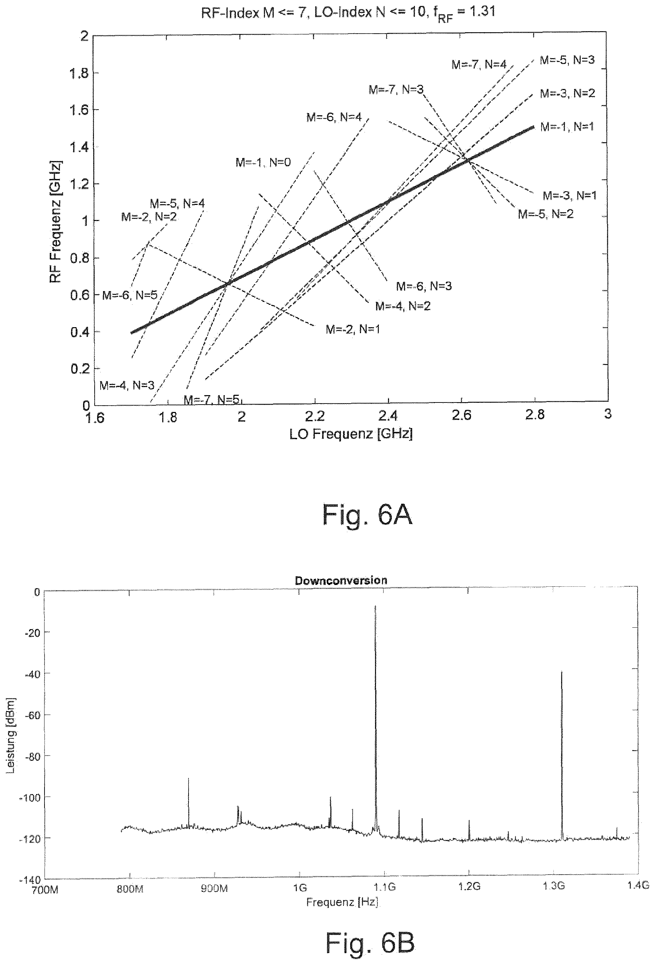

**Fig. 6A** depicts a frequency mixing chart for down-conversion (at the downstream converter 230). Again, the excited RF frequencies are shown as functions of the frequency of the LO, where M and N denote the harmonic excitations with M being at most 7 and N being at most 10.

Here, the line (M, N) = (-1, 1) is not isolated, because there are two other lines and thus the two mixing products of high order are present near the desired LO frequency of 2.4 GHz. However, **Fig. 6B** shows that no spurious signals could be measured (the attenuation is high for the two mixing products). As a conclusion, the theoretical mixing products are below the noise power level, due to their high order and the selection of an appropriate frequency mixer.

Further embodiments relate also to a system that combines both apparatuses 100, 200. To ensure full transparency and coherent signals in this system, the LO signal (e.g. the signal 25) is also transmitted and isolated in the apparatus 200 to be used again for down-conversion (in the downstream converter 230). Since the rotary joint 50 limits the transmission bandwidth (see Fig. 4), the signal is transmitted at 1.2 GHz by using couplers and combiners (see Fig. 2).

As mentioned before, one channel (for the first signal 10) will be unchanged in functionality. Since two channels of the system are to be able to transmit and receive, one path of the diplexer architecture is bi-directional.

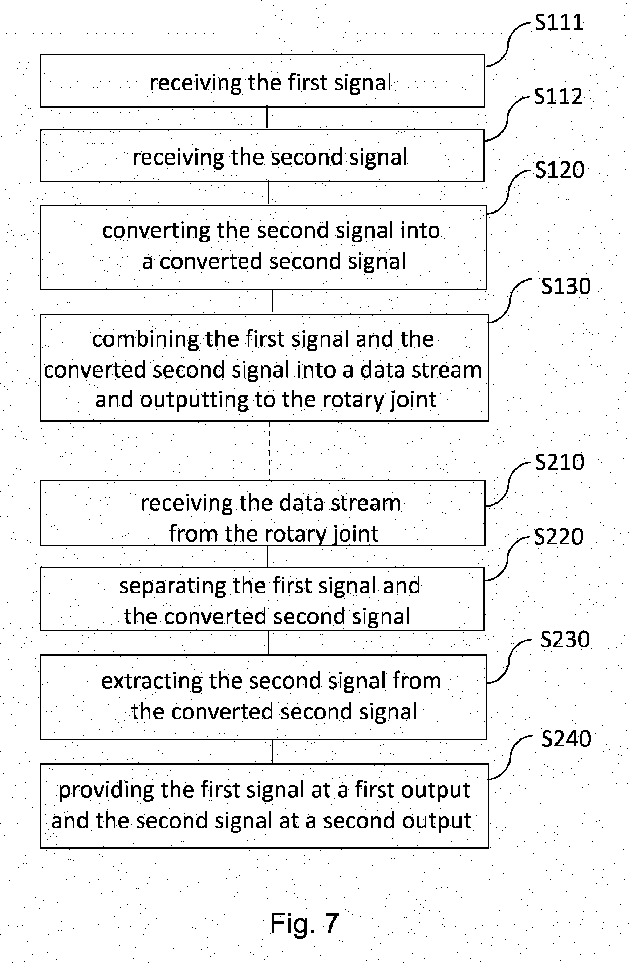

**Fig. 7** depicts a flow chart for a method for transmitting data through a rotary joint of a radar system according to an embodiment. The method includes the steps of:
- receiving S111, at a first input 111, the first signal 10;
- receiving S112, at a second input 112, the second signal 20;
- converting S120 the second signal 20 into a converted second signal 122 so that the converted second signal 20 and the first signal 10 lie in different frequency bands; and
- combining S130, by a diplexer 130, the first signal 10 and the converted second signal 122 into a data stream 135 and outputting the data stream 135 into a data channel passing through the rotary joint 50.

On the other side of the rotary joint 50, the implemented method comprises:
- receiving S210 the data stream 135 from the rotary joint 50, the data stream 135 including the first signal 10 and a converted second signal 122;
- separating S220, by a diplexer 220, the first signal 10 and a converted second signal 122 from the data stream 135;
- extracting S230 the second signal 20 from the converted second signal 122;
- providing S240 the first signal 10 at a first output 211 and the second signal 20 at a second output 212.

Again, the first output 211 and the second output 212 couple to different channels.

Embodiments are adapted, in particular, to handle also a high transmit power of at least 2 kW. Hence, power handling is critical for the used components. As described before in detail, the apparatus 100 can be separated into three different physical components, a high-power handling Rx-Filter 171 to protect the following up-converter 120. The upconverted signal 122 is combined with the first channel 10 by a high power handling diplexer unit 130.

The diplexer unit 130 is designed such that one band passes the transmitting and receiving frequency of 1030 MHz and 1090 MHz while the other one passes the LO signal at 1200 MHz and the up-converted signal at 1310 MHz. In addition, the diplexer unit 130 ensures very high isolation between the two paths 10, 20. This will ensure that the active upstream converter 120 is not exposed to the high transmit power. The (extraction) apparatus 200 may include the identical diplexer unit 220 and a downconverter 230, which reverses the upstream conversion in the transmission apparatus 100 by using the given LO signal. Hence, the same filtering and frequency doubling procedure is used to generate a 2.4-GHz-LO-tone at the downconverter 230.

The choice of amplifiers and mixers in the conversion path will affect the overall noise figure of the channel and therefore the performance. Hence, a LNA (low noise amplifier) is used in the upstream converter specifically for the discussed reason. By the use of additional amplification an overall gain can be provided to the receiver 200.

Certainly, the added filters and diplexers add some defined group delay, which according to embodiments will be considered. Due to the transparency of the architecture, the group delay is fixed and only variable in production run. The filters and electronics can cause a phase and amplitude shifting if a dependency on temperature is present. The additional phase and amplitude shift can be calibrated at system level (e.g. after manufacturing or via separate tests), or by introducing appropriate compensation methods. Therefore, according to embodiments, the apparatus 100 for transmitting and/or the apparatus 200 for extracting are configured to access calibrations data to implement an automatic correction to compensate any phase and/or amplitude changes caused by a varying temperature.

The description and drawings merely illustrate the principles of the disclosure. It will thus be appreciated that those skilled in the art will be able to devise various arrangements that, although not explicitly described or shown herein, embody the principles of the disclosure and are included within its scope.

Furthermore, while each embodiment may stand on its own as a separate example, it is to be noted that in other embodiments the defined features can be combined differently, i.e. a particular feature descripted in one embodiment may also be realized in other embodiments. Such combinations are covered by the disclosure herein unless it is stated that a specific combination is not intended.

Although the invention has been illustrated and described in detail by way of preferred embodiments, the invention is not limited by the examples disclosed, and other variations can be derived from these by the person skilled in the art without leaving the scope of the invention. It is therefore clear that there is a plurality of possible variations. It is also clear that embodiments stated by way of example are only really examples that are not to be seen as limiting the scope, application possibilities or configuration of the invention in any way. In fact, the preceding description and the description of the figures enable the person skilled in the art to implement the exemplary embodiments in concrete manner, wherein, with the knowledge of the disclosed inventive concept, the person skilled in the art is able to undertake various changes, for example, with regard to the functioning or arrangement of individual elements stated in an exemplary embodiment without leaving the scope of the invention, which is defined by the claims such as further explanations in the description.

### List of reference signs

- 10: first signal
- 20: second signal
- 25: coherence maintenance/synchronization signal
- 50: rotary joint of radar system
- 100, 200: apparatuses (for transmission and separation/extraction)
- 111, 112: first and second input
- 120: upstream converter
- 122: converted second signal
- 123: generator (oscillator)
- 124: reference signal
- 128,228: frequency mixer
- 125: local oscillator
- 126, 226: one or more frequency multiplier
- 130, 220, 240: diplexer
- 135: data stream
- 171, 172, 173, 271, 273: filter
- 174, 175, 272, 274: amplifier
- 210: input of separation apparatus
- 211, 212: first and second output for extracted signals
- 230: downstream converter

## Claims

1. An apparatus (100) for transmitting a first signal (10) and a second signal (20) from a radar component through a rotary joint (50), the apparatus (100) comprising:
a first input or output (111) for the first signal (10);
a second input (112) for the second signal (20);
an upstream converter (120) configured to convert the second signal (20) into a converted second signal (122) so that the converted second signal (122) and the first signal (10) lie in different frequency bands; and
a diplexer (130) with a first input for the first signal (10) and a second input for the converted second signal (122), the diplexer (130) being configured to combine the converted second signal (122) with an unchanged first signal (10) into a data stream (135) and to output the data stream (135) into a data channel for transmission through the rotary joint (50).

2. The apparatus (100) according to claim 1, wherein the upstream converter (120) comprises:
a generator (123) configured to generate a reference signal (124); and
a frequency mixer (128) configured to generate the converted second signal (122) by mixing the second signal (20) with the reference signal (124).

3. The apparatus (100) according to claim 2, wherein the generator (123) comprises a local oscillator (125) and one or more frequency multiplier (126a, 126b, ...) to generate the reference signal (124) with a predefined reference frequency.

4. The apparatus (100) according to claim 3, further comprising an adder (140) configured:
- to add the converted second signal (122) and a coherence maintenance signal (25) derived from an output of the local oscillator (125); and
- to provide a result as input at the second input of the diplexer (130).

5. The apparatus (100) according to one of claims 2 to 4, wherein the rotary joint (50) is coupled to a receiver adapted to receive the data stream (135) from the apparatus (100),
the generator (123) being configured to generate and to provide a synchronization signal to enable a synchronization with the reference signal (124) at the receiver.

6. The apparatus (100) according to one of claims 2 to 5, further comprising at least one of the following components:
- a first filter (171) arranged between the second input (112) and the upstream converter (120) for a frequency filtering of the second signal (20);
- a second filter (172) arranged between the generator (123) and the frequency mixer (128) for a frequency filtering of the reference signal (124);
- a third filter (173) arranged between the frequency mixer (123) and the second input of the diplexer (130) for frequency filtering of the converted second signal (122);
- a first amplifier (174) arranged between the frequency mixer (123) and the first filter (171);
- a second amplifier (175) arranged between the frequency mixer (123) and the second input of the diplexer (130) for amplifying the converted second signal (122).

7. The apparatus (100) according to one of the preceding claims,
wherein the first signal (10) is in a first frequency band between 1030 MHz and 1090 MHz and the upstream converter (120) is configured to generate the converted second signal (122) in a second frequency band between 1200 MHz and 1310 MHz, and/or
wherein the diplexer (130) is a high-power component operable at powers of up 2 kW or more power.

8. An apparatus (200) for extracting a first signal (10) and a second signal (20) from a data stream (135) received from a radar component through a rotary joint (50), the apparatus (200) comprising:
an input (210) for receiving the data stream (135) from the rotary joint (50), the data stream (135) including the first signal (10) and a converted second signal (122);
a diplexer (220) configured to separate the first signal (10) and a converted second signal (122) in the data stream (135);
a downstream converter (230) configured to extract the second signal (20) from the converted second signal (122); and
a first output or input (211) for providing an unchanged first signal (10) and a second output (212) for providing the second signal (20), the first output (211) and the second output (212) are configured to couple to different physical channels.

9. The apparatus (200) according to claim 8, wherein the data stream (135) further includes a coherence maintenance signal (25) suitable for maintaining a coherence between conversions at the downstream converter (230) and an associated upstream converter (120), the diplexer (220) being further configured to provide the converted second signal (122) together with the coherence maintenance signal (25) to the downstream converter (230),
the downstream converter (230) further comprising:
a further diplexer (240) configured to separate the provided converted second signal (122) and the coherence maintenance signal (25); and
a frequency mixer (228) configured to enable an extraction of the second signal (20) based on the converted second signal (122) and the coherence maintenance signal (25).

10. The apparatus (200) according to claim 8, wherein the data stream (135) further includes a coherence maintenance signal (25) suitable for maintaining a coherence between conversions at the downstream converter (230) and an associated upstream converter (120), the diplexer (220) being part of a triplexer configured to separate the first signal (10), the upconverted second signal (122) and the coherence maintenance signal (25),
the downstream converter (230) further comprising a frequency mixer (228) configured to convert the converted second signal (122) to the second signal (20) using the coherence maintenance signal (25).

11. The apparatus (200) according to claim 9 or claim 10, further comprising at least one of the following components:
- a first filter (271) arranged between the frequency mixer (228) and the second output (212) for a frequency filtering of the second signal (20);
- a first amplifier (272) arranged between the first filter (271) and the second output (212) to amplify the second signal (20);
- a frequency multiplier (226) arranged between the frequency mixer (128) and the further diplexer (240) or the triplexer to generate a reference signal (124) from the coherence maintenance signal (25), the reference signal (124) having a frequency in accordance to a frequency used in a conversion of the converted second signal (122);
- a second filter (273) arranged between the frequency mixer (228) and the frequency multiplier (226) for a frequency filtering of the reference signal (124);
- a second amplifier (274) arranged between the frequency multiplier (226) and the further diplexer (240) or the triplexer for amplifying the coherence maintenance signal (25).

12. The apparatus (100, 200) according to one of the preceding claims, the apparatus being further configured to compensate a shift in the phase and/or amplitude caused by a changed temperature based on calibration data.

13. A data transmission system for signals through a rotary joint (50) between a rotatable radar component and a stationary radar component, the system comprising:
an apparatus (100) for transmitting according to one of claims 1 to 7, which is configured to couple to the rotatable radar component or to the stationary radar component; and
an apparatus (200) for extracting according to one of claims 8 to 12, which is configured to couple to the stationary radar component or to the rotatable radar component, respectively.

14. A method for transmitting a first signal (10) and a second signal (20) from a rotatable radar component through a rotary joint (50), the method comprising:
transmitting, at a first input (111), the first signal (10);
receiving, at a second input (112), the second signal (20);
converting the second signal (20) into a converted second signal (122) so that the converted second signal (20) and the first signal (10) lie in different frequency bands; and
combining, by a diplexer (130), the first, unchanged, signal (10) and the converted second signal (122) into a data stream (135) and outputting the data stream (135) into a data channel passing through the rotary joint (50).

15. A method for extracting a first signal (10) and a second signal (20) from a data stream (135) received from a rotatable radar component through a rotary joint (50), the method comprising:
receiving the data stream (135) from the rotary joint (50), the data stream (135) including the first signal (10) and a converted second signal (122);
separating, by a diplexer (220), the first signal (10) and a converted second signal (122) from the data stream (135);
extracting the second signal (20) from the converted second signal (122);
providing, at a first output (211), the first, unchanged, signal (10); and
providing, at a second output (212), the second signal (20),
wherein the first output (211) and the second output (212) couple to different channels.

## Patentansprüche

1. Vorrichtung (100) zum Übertragen eines ersten Signals (10) und eines zweiten Signals (20) von einer Radarkomponente über eine Drehkopplung (50), die Vorrichtung (100) umfassend:
einen ersten Eingang oder Ausgang (111) für das erste Signal (10);
einen zweiten Eingang (112) für das zweite Signal (20);
einen Aufwärtswandler (120), der konfiguriert ist, um das zweite Signal (20) in ein gewandeltes zweites Signal (122) zu wandeln, sodass das gewandelte zweite Signal (122) und das erste Signal (10) in verschiedenen Frequenzbändern liegen; und
einen Diplexer (130) mit einem ersten Eingang für das erste Signal (10) und einem zweiten Eingang für das gewandelte zweite Signal (122), wobei der Diplexer (130) konfiguriert ist, um das gewandelte zweite Signal (122) mit einem unveränderten ersten Signal (10) in einen Datenstrom (135) zu kombinieren und den Datenstrom (135) in einen Datenkanal für eine Übertragung über die Drehkopplung (50) auszugeben.

2. Vorrichtung (100) nach Anspruch 1, wobei der Aufwärtswandler (120) umfasst:
einen Generator (123), der konfiguriert ist, um ein Referenzsignal (124) zu generieren; und
einen Frequenzmischer (128), der konfiguriert ist, um das gewandelte zweite Signal (122) durch Mischen des zweiten Signals (20) mit dem Referenzsignal (124) zu generieren.

3. Vorrichtung (100) nach Anspruch 2, wobei der Generator (123) einen Lokaloszillator (125) und einen oder mehrere Frequenzvervielfacher (126a, 126b,...) umfasst, um das Referenzsignal (124) mit einer vordefinierten Referenzfrequenz zu generieren.

4. Vorrichtung (100) nach Anspruch 3, ferner umfassend einen Addierer (140), der konfiguriert ist:
- zum Addieren des gewandelten zweiten Signals (122) und eines Kohärenzaufrechterhaltungssignals (25), das von einem Ausgang des Lokaloszillators (125) abgeleitet wird; und
- zum Bereitstellen eines Ergebnisses als Eingang an dem zweiten Eingang des Diplexers (130).

5. Vorrichtung (100) nach einem der Ansprüche 2 bis 4, wobei die Drehkopplung (50) mit einem Empfänger, der angepasst ist, um den Datenstrom (135) von der Vorrichtung (100) zu empfangen, verbunden ist,
wobei der Generator (123) konfiguriert ist, um ein Synchronisationssignal zu generieren und bereitzustellen, um eine Synchronisation mit dem Referenzsignal (124) an dem Empfänger zu ermöglichen.

6. Vorrichtung (100) nach einem der Ansprüche 2 bis 5, ferner umfassend mindestens eine von den folgenden Komponenten:
- ein erstes Filter (171), das zwischen dem zweiten Eingang (112) und dem Aufwärtswandler (120) für eine Frequenzfilterung des zweiten Signals (20) angeordnet ist;
- ein zweites Filter (172), das zwischen dem Generator (123) und dem Frequenzmischer (128) für eine Frequenzfilterung des Referenzsignals (124) angeordnet ist;
- ein drittes Filter (173), das zwischen dem Frequenzmischer (123) und dem zweiten Eingang des Diplexers (130) für die Frequenzfilterung des gewandelten zweiten Signals (122) angeordnet ist;
- einen ersten Verstärker (174), der zwischen dem Frequenzmischer (123) und dem ersten Filter (171) angeordnet ist;
- einen zweiten Verstärker (175), der zwischen dem Frequenzmischer (123) und dem zweiten Eingang des Diplexers (130) zum Verstärken des gewandelten zweiten Signals (122) angeordnet ist.

7. Vorrichtung (100) nach einem der vorstehenden Ansprüche,
wobei sich das erste Signal (10) in einem ersten Frequenzband zwischen 1030 MHz und 1090 MHz befindet und der Aufwärtswandler (120) konfiguriert ist, um das gewandelte zweite Signal (122) in einem zweiten Frequenzband zwischen 1200 MHz und 1310 MHz zu generieren und/oder
wobei der Diplexer (130) eine Hochleistungskomponente ist, die bei Leistungen aufwärts von 2 kW oder mehr Leistung betriebsfähig ist.

8. Vorrichtung (200) zum Extrahieren eines ersten Signals (10) und eines zweiten Signals (20) von einem Datenstrom (135), der von einer Radarkomponente über eine Drehkopplung (50) empfangen wird, die Vorrichtung (200) umfassend:
einen Eingang (210) zum Empfangen des Datenstroms (135) von der Drehkopplung (50), wobei der Datenstrom (135) das erste Signal (10) und ein gewandeltes zweites Signal (122) beinhaltet;
einen Diplexer (220), der konfiguriert ist, um das erste Signal (10) und ein gewandeltes zweites Signal (122) in dem Datenstrom (135) zu trennen;
einen Abwärtswandler (230), der konfiguriert ist, um das zweite Signal (20) von dem gewandelten zweiten Signal (122) zu extrahieren; und
einen ersten Ausgang oder Eingang (211) zum Bereitstellen eines unveränderten ersten Signals (10) und einen zweiten Ausgang (212) zum Bereitstellen des zweiten Signals (20), wobei der erste Ausgang (211) und der zweite Ausgang (212) konfiguriert sind, um sich mit verschiedenen physikalischen Kanälen zu verbinden.

9. Vorrichtung (200) nach Anspruch 8, wobei der Datenstrom (135) ferner ein Kohärenzaufrechterhaltungssignal (25), das zum Aufrechterhalten einer Kohärenz zwischen Wandlungen an dem Abwärtswandler (230) und einem zugehörigen Aufwärtswandler (120) geeignet ist, beinhaltet, wobei der Diplexer (220) ferner konfiguriert ist, um das gewandelte zweite Signal (122) zusammen mit dem Kohärenzaufrechterhaltungssignal (25) an den Abwärtswandler (230) bereitzustellen, der Abwärtswandler (230) ferner umfassend:
einen weiteren Diplexer (240), der konfiguriert ist, um das bereitgestellte gewandelte zweite Signal (122) und das Kohärenzaufrechterhaltungssignal (25) zu trennen; und einen Frequenzmischer (228), der konfiguriert ist, um eine Extraktion des zweiten Signals (20) basierend auf dem gewandelten zweiten Signal (122) und dem Kohärenzaufrechterhaltungssignal (25) zu ermöglichen.

10. Vorrichtung (200) nach Anspruch 8, wobei der Datenstrom (135) ferner ein Kohärenzaufrechterhaltungssignal (25), das zum Aufrechterhalten einer Kohärenz zwischen Wandlungen an dem Abwärtswandler (230) und einem zugehörigen Aufwärtswandler (120) geeignet ist, beinhaltet, wobei der Diplexer (220) Teil eines Triplexers ist, der konfiguriert ist, um das erste Signal (10), das aufwärts gewandelte zweite Signal (122) und das Kohärenzaufrechterhaltungssignal (25) zu trennen,
der Abwärtswandler (230) ferner umfassend einen Frequenzmischer (228), der konfiguriert ist, um das gewandelte zweite Signal (122) unter Verwendung des Kohärenzaufrechterhaltungssignals (25) in das zweite Signal (20) zu wandeln.

11. Vorrichtung (200) nach Anspruch 9 oder 10, ferner umfassend mindestens eine von den folgenden Komponenten:
- ein erstes Filter (271), das zwischen dem Frequenzmischer (228) und dem zweiten Ausgang (212) für eine Frequenzfilterung des zweiten Signals (20) angeordnet ist;
- einen ersten Verstärker (272), der zwischen dem ersten Filter (271) und dem zweiten Ausgang (212) angeordnet ist, um das zweite Signal (20) zu verstärken;
- einen Frequenzvervielfacher (226), der zwischen dem Frequenzmischer (128) und dem weiteren Diplexer (240) oder dem Triplexer angeordnet ist, um ein Referenzsignal (124) von dem Kohärenzaufrechterhaltungssignal (25) zu generieren, wobei das Referenzsignal (124) eine Frequenz gemäß einer Frequenz, die in einer Wandlung des gewandelten zweiten Signals (122) verwendet wird, aufweist;
- ein zweites Filter (273), das zwischen dem Frequenzmischer (228) und dem Frequenzvervielfacher (226) für eine Frequenzfilterung des Referenzsignals (124) angeordnet ist;
- einen zweiten Verstärker (274), der zwischen dem Frequenzvervielfacher (226) und dem weiteren Diplexer (240) oder dem Triplexer zum Verstärken des Kohärenzaufrechterhaltungssignals (25) angeordnet ist.

12. Vorrichtung (100, 200) nach einem der vorstehenden Ansprüche, wobei die Vorrichtung ferner konfiguriert ist, um eine Verschiebung in der Phase und/oder der Amplitude, die durch eine geänderte Temperatur verursacht wird, basierend auf Kalibrierungsdaten zu kompensieren.

13. Datenübertragungssystem für Signale über eine Drehkopplung (50) zwischen einer drehbaren Radarkomponente und einer stationären Radarkomponente, das System umfassend:
eine Vorrichtung (100) zum Übertragen nach einem der Ansprüche 1 bis 7, die konfiguriert ist, um sich mit der drehbaren Radarkomponente oder mit der stationären Radarkomponente zu verbinden; und
eine Vorrichtung (200) zum Extrahieren nach einem der Ansprüche 8 bis 12, die konfiguriert ist, um sich mit der stationären Radarkomponente beziehungsweise mit der drehbaren Radarkomponente zu verbinden.

14. Verfahren zum Übertragen eines ersten Signals (10) und eines zweiten Signals (20) von einer drehbaren Radarkomponente über eine Drehkopplung (50), das Verfahren umfassend:
Übertragen, an einem ersten Eingang (111), des ersten Signals (10);
Empfangen, an einem zweiten Eingang (112), des zweiten Signals (20);
Wandeln des zweiten Signals (20) in ein gewandeltes zweites Signal (122), sodass das gewandelte zweite Signal (20) und das erste Signal (10) in verschiedenen Frequenzbändern liegen; und
Kombinieren, durch einen Diplexer (130), des ersten, unveränderten Signals (10) und des gewandelten zweiten Signals (122) in einen Datenstrom (135) und Ausgeben des Datenstroms (135) in einen Datenkanal, der über die Drehkopplung (50) führt.

15. Verfahren zum Extrahieren eines ersten Signals (10) und eines zweiten Signals (20) von einem Datenstrom (135), der von einer drehbaren Radarkomponente über eine Drehkopplung (50) empfangen wird, das Verfahren umfassend:
Empfangen des Datenstroms (135) von der Drehkopplung (50), wobei der Datenstrom (135) das erste Signal (10) und ein gewandeltes zweites Signal (122) beinhaltet;
Trennen, durch einen Diplexer (220), des ersten Signals (10) und eines gewandelten zweiten Signals (122) von dem Datenstrom (135);
Extrahieren des zweiten Signals (20) von dem gewandelten zweiten Signal (122);
Bereitstellen, an einem ersten Ausgang (211), des ersten unveränderten Signals (10); und
Bereitstellen, an einem zweiten Ausgang (212), des zweiten Signals (20),
wobei sich der erste Ausgang (211) und der zweite Ausgang (212) mit verschiedenen Kanälen verbinden.

## Revendications

1. Appareil (100) pour émettre un premier signal (10) et un second signal (20) à partir d'un composant radar à travers un joint tournant (50), l'appareil (100) comprenant :
une première entrée ou sortie (111) pour le premier signal (10) ;
une seconde entrée (112) pour le second signal (20) ;
un convertisseur amont (120) configuré pour convertir le second signal (20) en un second signal converti (122) de sorte que le second signal converti (122) et le premier signal (10) se trouvent dans des bandes de fréquences différentes ; et
un diplexeur (130) doté d'une première entrée pour le premier signal (10) et d'une seconde entrée pour le second signal converti (122), le diplexeur (130) étant configuré pour combiner le second signal converti (122) doté d'un premier signal inchangé (10) en un flux de données (135) et pour sortir le flux de données (135) dans un canal de données pour transmission à travers le joint tournant (50).

2. Appareil (100) selon la revendication 1, dans lequel le convertisseur amont (120) comprend :
un générateur (123) configuré pour générer un signal de référence (124) ; et
un mélangeur de fréquences (128) configuré pour générer le second signal converti (122) en mélangeant le second signal (20) avec le signal de référence (124).

3. Appareil (100) selon la revendication 2, dans lequel le générateur (123) comprend un oscillateur local (125) et un ou plusieurs multiplicateurs de fréquence (126a, 126b,...) pour générer le signal de référence (124) avec une fréquence de référence prédéfinie.

4. Appareil (100) selon la revendication 3, comprenant en outre un additionneur (140) configuré :
- pour ajouter le second signal converti (122) et un signal de maintien de cohérence (25) dérivé d'une sortie de l'oscillateur local (125) ; et
- pour fournir un résultat en tant qu'entrée à la seconde entrée du diplexeur (130).

5. Appareil (100) selon l'une des revendications 2 à 4, dans lequel le joint tournant (50) est couplé à un récepteur adapté pour recevoir le flux de données (135) de l'appareil (100),
le générateur (123) étant configuré pour générer et pour fournir un signal de synchronisation afin de permettre une synchronisation avec le signal de référence (124) au niveau du récepteur.

6. Appareil (100) selon l'une des revendications 2 à 5, comprenant en outre au moins l'un des composants suivants :
- un premier filtre (171) disposé entre la seconde entrée (112) et le convertisseur amont (120) pour un filtrage en fréquence du second signal (20) ;
- un deuxième filtre (172) disposé entre le générateur (123) et le mélangeur de fréquence (128) pour un filtrage en fréquence du signal de référence (124) ;
- un troisième filtre (173) disposé entre le mélangeur de fréquence (123) et la seconde entrée du diplexeur (130) pour le filtrage en fréquence du second signal converti (122) ;
- un premier amplificateur (174) disposé entre le mélangeur de fréquence (123) et le premier filtre (171) ;
- un second amplificateur (175) disposé entre le mélangeur de fréquence (123) et la seconde entrée du diplexeur (130) pour amplifier le second signal converti (122).

7. Appareil (100) selon l'une des revendications précédentes,
dans lequel le premier signal (10) se trouve dans une première bande de fréquences entre 1030 MHz et 1090 MHz et le convertisseur amont (120) est configuré pour générer le second signal converti (122) dans une seconde bande de fréquences entre 1200 MHz et 1310 MHz, et/ou
dans lequel le diplexeur (130) est un composant de haute puissance pouvant fonctionner à des puissances allant jusqu'à 2 kW ou plus.

8. Appareil (200) pour extraire un premier signal (10) et un second signal (20) d'un flux de données (135) reçu d'un composant radar à travers un joint tournant (50), l'appareil (200) comprenant :
une entrée (210) pour recevoir le flux de données (135) du joint tournant (50), le flux de données (135) comportant le premier signal (10) et un second signal converti (122) ;
un diplexeur (220) configuré pour séparer le premier signal (10) et un second signal converti (122) dans le flux de données (135) ;
un convertisseur en aval (230) configuré pour extraire le second signal (20) du second signal converti (122) ; et
une première sortie ou entrée (211) pour fournir un premier signal (10) inchangé et une seconde sortie (212) pour fournir le second signal (20), la première sortie (211) et la seconde sortie (212) étant configurées pour se coupler à différents canaux physiques.

9. Appareil (200) selon la revendication 8, dans lequel le flux de données (135) comprend en outre un signal de maintien de cohérence (25) adapté pour maintenir une cohérence entre les conversions au niveau du convertisseur en aval (230) et un convertisseur amont associé (120), le diplexeur (220) étant en outre configuré pour fournir le second signal converti (122) conjointement avec le signal de maintien de cohérence (25) au convertisseur en aval (230),
le convertisseur en aval (230) comprenant en outre :
un autre diplexeur (240) configuré pour séparer le second signal converti fourni (122) et le signal de maintien de cohérence (25) ; et
un mélangeur de fréquences (228) configuré pour permettre une extraction du second signal (20) sur la base du second signal converti (122) et du signal de maintien de cohérence (25).

10. Appareil (200) selon la revendication 8, dans lequel le flux de données (135) comprend en outre un signal de maintien de cohérence (25) adapté pour maintenir une cohérence entre les conversions au niveau du convertisseur en aval (230) et un convertisseur amont associé (120), le diplexeur (220) faisant partie d'un triplexeur configuré pour séparer le premier signal (10), le second signal converti vers le haut (122) et le signal de maintien de cohérence (25),
le convertisseur en aval (230) comprenant en outre un mélangeur de fréquences (228) configuré pour convertir le second signal converti (122) en second signal (20) à l'aide du signal de maintien de cohérence (25).

11. Appareil (200) selon la revendication 9 ou la revendication 10, comprenant en outre au moins l'un des composants suivants :
- un premier filtre (271) disposé entre le mélangeur de fréquences (228) et la seconde sortie (212) pour un filtrage en fréquence du second signal (20) ;
- un premier amplificateur (272) disposé entre le premier filtre (271) et la seconde sortie (212) pour amplifier le second signal (20) ;
- un multiplicateur de fréquences (226) disposé entre le mélangeur de fréquences (128) et l'autre diplexeur (240) ou le triplexeur pour générer un signal de référence (124) à partir du signal de maintien de cohérence (25), le signal de référence (124) ayant une fréquence conformément à une fréquence utilisée dans une conversion du second signal converti (122) ;
- un second filtre (273) disposé entre le mélangeur de fréquences (228) et le multiplicateur de fréquences (226) pour un filtrage en fréquence du signal de référence (124) ;
- un second amplificateur (274) disposé entre le multiplicateur de fréquences (226) et l'autre diplexeur (240) ou le triplexeur pour amplifier le signal de maintien de cohérence (25).

12. Appareil (100, 200) selon l'une quelconque des revendications précédentes, l'appareil étant en outre configuré pour compenser un décalage de phase et/ou d'amplitude provoqué par une température modifiée sur la base de données d'étalonnage.

13. Système d'émission de données pour des signaux à travers un joint tournant (50) entre un composant radar rotatif et un composant radar fixe, le système comprenant :
un appareil (100) d'émission selon l'une des revendications 1 à 7, qui est configuré pour se coupler au composant radar rotatif ou au composant radar fixe ; et
un appareil (200) d'extraction selon l'une des revendications 8 à 12, qui est configuré pour se coupler respectivement au composant radar fixe ou au composant radar rotatif.

14. Procédé d'émission d'un premier signal (10) et d'un second signal (20) à partir d'un composant radar rotatif à travers un joint tournant (50), le procédé comprenant :
l'émission, au niveau d'une première entrée (111), du premier signal (10) ;
la réception, au niveau d'une seconde entrée (112), du second signal (20) ;
la conversion du second signal (20) en un second signal converti (122) de sorte que le second signal converti (20) et le premier signal (10) se trouvent dans des bandes de fréquences différentes ; et
la combinaison, par un diplexeur (130), du premier signal, inchangé, (10) et du second signal converti (122) en un flux de données (135) et la sortie du flux de données (135) dans un canal de données passant par le joint tournant (50).

15. Procédé pour extraire un premier signal (10) et un second signal (20) d'un flux de données (135) reçu d'un composant radar rotatif à travers un joint tournant (50), le procédé comprenant :
la réception du flux de données (135) du joint tournant (50), le flux de données (135) comportant le premier signal (10) et un second signal converti (122) ;
la séparation, par un diplexeur (220), du premier signal (10) et d'un second signal converti (122) du flux de données (135) ;
l'extraction du second signal (20) du second signal converti (122) ;
la fourniture, au niveau d'une première sortie (211), du premier signal (10), inchangé ; et
la fourniture, au niveau d'une seconde sortie (212), du second signal (20),
dans lequel la première sortie (211) et la seconde sortie (212) se couplent à des canaux différents.
